# EUROPEAN PATENT APPLICATION

(11) **EP 4 495 801 A1**
(43) Date of publication of application: **22.01.2025**
(21) Application number: 23769580.4
(22) Date of filing: 03.03.2023
(51) Int. Cl.: G06F 16/55

(54) **IMAGE ASSOCIATION METHOD AND APPARATUS, ELECTRONIC DEVICE, AND STORAGE MEDIUM**

(30) Priority: 18.03.2022 CN 202210272952
(71) Applicant: Beijing Co Wheels Technology Co., Ltd, Beijing 101300 (CN)
(72) Inventor: LIU, Kun, Beijing 101300 (CN)
(74) Representative: Maiwald GmbH
(86) International application number: PCT/CN2023/079508
(87) International publication number: WO 2023/174074

(57) **Abstract**

An image association method, comprising: obtaining a plurality of images to be associated, each of the plurality of images to be associated having corresponding image information; if it is determined, according to the image information corresponding to the plurality of images to be associated, that the plurality of images to be associated do not belong to the same driving data, determining at least one piece of spatial data according to the image information corresponding to the plurality of images to be associated, the driving data comprising a plurality of frames of images generated by a vehicle and image information corresponding to each frame of image in the plurality of frames of images; and associating two images to be associated corresponding to target spatial data satisfying a preset condition in the at least one piece of spatial data.

## Description

### CROSS REFERENCE TO RELATED APPLICATIONS

This application is based on and claims priority to Chinese patent application No. 202210272952.3, filed on March 18, 2022, the entire contents of which are incorporated herein by reference.

### TECHNICAL FIELD

The disclosure relates to a field of image processing technologies, in particular to an image association method, an image association apparatus, an electronic device and a storage medium.

### BACKGROUND

With the development of computer technology, images are widely used in the automotive field. In many automotive navigation and positioning application scenarios, it is necessary to comprehensively analyze a large number of images taken by the car to obtain a large number of image features. A common method includes associating the images and extracting features of the associated images for application. The traditional techniques mostly manually annotate images and associate images with the same annotation. However, for massive image data, it requires huge labor costs and time costs, and is not easy to implement.

### SUMMARY

In order to solve the above technical problems, the disclosure provides an image association method, an image association apparatus, an electronic device and a storage medium, which can quickly and accurately associate images automatically, thereby reducing the waste of labor and material resources.

According to a first aspect of embodiments of the disclosure, an image association method is provided. The method includes:
obtaining a plurality of images to be associated, in which each of the plurality of images to be associated has corresponding image information;
in response to determining that the plurality of images to be associated do not belong to the same driving data according to the image information corresponding to the plurality of images to be associated, determining at least one piece of spatial data according to the image information corresponding to the plurality of images to be associated, in which the driving data includes a plurality of frames of images generated by a vehicle and image information corresponding to each of the plurality of frames of images; and
associating images to be associated corresponding to target spatial data that satisfies a preset condition in the at least one piece of spatial data.

**In** some embodiments, the method further includes:
in response to determining that the plurality of images to be associated belong to the same driving data according to the image information corresponding to the plurality of images to be associated, determining whether the plurality of images to be associated are adjacent frames of images in the driving data; and
if yes, associating images that are adjacent frames in the plurality of images to be associated; if no, determining the at least one piece of spatial data according to the image information corresponding to the plurality of images to be associated.

In some embodiments, the spatial data includes distance data and angle data.

In some embodiments, associating the images to be associated corresponding to the target spatial data that satisfies the preset condition in the at least one piece of spatial data, includes:
associating the images to be associated corresponding to the target spatial data whose distance data is less than a first preset threshold and whose angle data is less than a second preset threshold in the at least one piece of spatial data, in which two corresponding images to be associated exist in one piece of spatial data.

In some embodiments, the method further includes:
generating a first judgment result according to image information corresponding to the two associated images;
generating a second judgment result according to extracted feature information of the two associated images; and
if any of the first judgment result and the second judgment result indicates that the two associated images are associated incorrectly, disassociating the two associated images;
in which the judgment result indicates that the two associated images are associated incorrectly or the two associated images are not associated incorrectly.

In some embodiments, the two associated images includes a first image and a second image, and generating the first judgment result according to the image information corresponding to the two associated images, includes:
after determining a first coordinate of a first vehicle that generates the first image in image information corresponding to the first image, mapping the first vehicle into a pixel coordinate system of the second image according to the first coordinate, and generating a third judgment result according to the pixel coordinate system of the second image after the mapping;
after determining a second coordinate of a second vehicle that generates the second image in image information corresponding to the second image, mapping the second vehicle into a pixel coordinate system of the first image according to the second coordinate, and generating a fourth judgment result according to the pixel coordinate system of the first image after the mapping; and
generating the first judgment result according to the third judgment result and the fourth judgment result.

In some embodiments, generating the third judgment result according to the pixel coordinate system of the second image after the mapping, includes:
in the pixel coordinate system of the second image after the mapping, determining whether the first vehicle is within a drivable area of the second vehicle that generates the second image; if yes, generating the third judgment result indicating that the two associated images are not associated incorrectly; if no, generating the third judgment result indicating that the two associated images are associated incorrectly;
in which the drivable area of the second vehicle is determined according to a segmented image of the second image.

In some embodiments, generating the second judgment result according to the extracted feature information of the two associated images, includes:
extracting the feature information of the two associated images to obtain feature information of the first image of the two associated images and feature information of the second image of the two associated images;
matching feature points in the feature information of the first image and the feature information of the second image, and determining a number of feature points that are successfully matched; and
generating the second judgment result according to the number of feature points that are successfully matched and a third preset threshold.

According to a second aspect of embodiments of the disclosure, an image association apparatus is provided. The apparatus includes:
an obtaining unit, configured to obtain a plurality of images to be associated, in which each of the plurality of images to be associated has corresponding image information;
a determining unit, configured to, in response to determining that the plurality of images to be associated do not belong to the same driving data according to the image information corresponding to the plurality of images to be associated, determine at least one piece of spatial data according to the image information corresponding to the plurality of images to be associated, in which the driving data includes a plurality of frames of images generated by a vehicle and image information corresponding to each of the plurality of frames of images; and
an associating unit, configured to associate images to be associated corresponding to target spatial data that satisfies a preset condition in the at least one piece of spatial data.

According to a third aspect of embodiments of the disclosure, an electronic device is provided. The electronic device includes:
a memory;
a processor; and
computer programs;
in which the computer programs are stored in the memory and configured to be executed by the processor to implement the image association method as described above.

According to a fourth aspect of embodiments of the disclosure, a computer readable storage medium having computer programs stored thereon is provided. When the computer programs are executed by a processor, the steps of the image association method as described above are implemented.

According to a fifth aspect of embodiments of the disclosure, a computer program product including computer programs is provided. When the computer programs are executed by a processor, the above image association method is implemented.

The embodiments of the disclosure provide an image association method, an image association apparatus, an electronic device and a storage medium. The image association method includes: obtaining a plurality of images to be associated, in which each of the plurality of images to be associated has corresponding image information; in response to determining that the plurality of images to be associated do not belong to the same driving data according to the image information corresponding to the plurality of images to be associated, determining at least one piece of spatial data according to the image information corresponding to the plurality of images to be associated, in which the driving data includes a plurality of frames of images generated by a vehicle and image information corresponding to each of the plurality of frames of images; and associating images to be associated corresponding to target spatial data that satisfies a preset condition in the at least one piece of spatial data. The method provided by this disclosure performs initial classification on the images to be associated by judging the driving data to which the images to be associated belong, which can speed up the image association process and reduce the amount of calculation. For images that do not belong to the same driving data, i.e., images that do not belong to images generated by the same vehicle at the same time point, the spatial data between the two images is further calculated, which can be understood as data of the position and posture when the two images were generated. Whether the two images are associated or not can be determined according to the spatial data between the two images. In this way, the images can be automatically associated quickly and accurately, which reduces the waste of labor and material resources and can facilitate subsequently positioning the vehicle according to the associated images.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.

In order to clearly illustrate technical solutions of embodiments of the disclosure or in the related art, a brief description of drawings used in embodiments or in the related art is given below. Obviously, for those skilled in the art, other drawings can be obtained according to these drawings without inventive work.
FIG. 1 is a flowchart of an image association method provided by an embodiment of the disclosure.
FIG. 2 is a flowchart of an image association method provided by an embodiment of the disclosure.
FIG. 3 is a flowchart of an image association method provided by an embodiment of the disclosure.
FIG. 4 is a schematic diagram of an image to be associated provided by an embodiment of the disclosure.
FIG. 5 is a block diagram of an image association apparatus provided by an embodiment of the disclosure.
FIG. 6 is a block diagram of an electronic device provided by an embodiment of the disclosure.

### DETAILED DESCRIPTION

In order to enable a clearer understanding of the above purposes, features and advantages of the disclosure, the solutions of the disclosure will be further described below. It is noted that the embodiments of the disclosure and the features in the embodiments can be combined with each other without conflict.

Many specific details are set forth in the following description in order to facilitate a full understanding of the disclosure, but the disclosure may also be implemented in other ways than those described herein. Obviously, the embodiments in the specification are only a portion of the embodiments of the disclosure and not all of them.

For the above technical problems, the disclosure provides an image association method, which is specifically illustrated by one or more of the following embodiments.

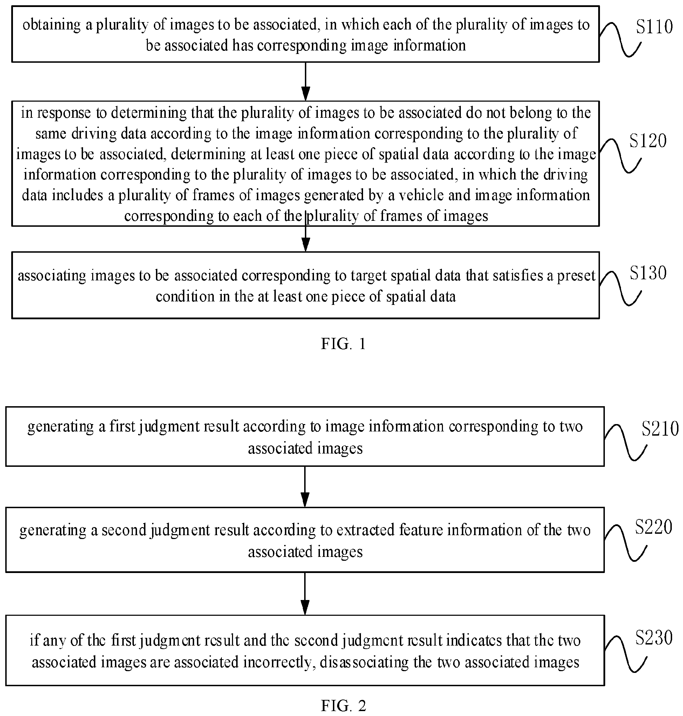

FIG. 1 is a flowchart of an image association method provided by an embodiment of the disclosure. The image association method provided in the disclosure may be performed by a terminal or a server. The method includes the following steps S110-S130 as shown in FIG. 1.

At step S110, a plurality of images to be associated are obtained, in which each of the plurality of images to be associated has corresponding image information.

It is understood that a plurality of images to be associated are obtained. The images to be associated can be obtained from driving data, which is data with a unique identification generated by a vehicle regardless of whether it is in a driving state or in a stationary state. The driving data involved in the disclosure includes a plurality of frames of images with time stamps generated by the vehicle and image information corresponding to each frame of image. The plurality of frames of images are generated by a camera device provided on the vehicle, the image information corresponding to each frame of image is captured by a data acquisition device provided on the vehicle. The image information includes spatial coordinates with time stamps (GPS coordinates), segmented images of the image, and relevant parameters of the camera device. Each frame of image has a corresponding spatial coordinate. That is, the spatial coordinate with the time stamp and the image with the time stamp are in time alignment. The time alignment refers to acquiring a spatial coordinate corresponding to the image during the time period in which the image is generated. The camera device may be a camera, and the relevant parameters of the camera device include internal parameters of the camera, a distortion coefficient, and external parameters between the camera and the vehicle, and other calibration results. If the camera and a positioning device for acquiring a GPS coordinate are not mounted at the same location of the vehicle, and it is known that a distance between the camera and the positioning device is fixed, the acquired GPS coordinate of the positioning device can be understood as the GPS coordinate of the camera, and thus the acquired GPS coordinate can be understood as the GPS coordinate of the image. In detail, the plurality of images to be associated may be obtained within a specified area, which may be several specified streets and may include roads such as main and secondary roads, and roads on the bridge and roads under the bridge. That is, the plurality of images to be associated generated by the vehicle are obtained in several streets of the specified area. In this case, the plurality of frames of images may be generated by at least one vehicle. It is understood that the identification of the driving data may include a vehicle identification of the vehicle and the time of the driving data, or a device identification of the data acquisition device and the generation time of the driving data. The vehicle identification may adopt a Vehicle Identification Number (VIN) of the vehicle, and the device identification of the driving data acquisition device may adopt a unique identification code of the driving data acquisition device at the factory. The device identification of the data acquisition device and the vehicle identification of the vehicle may have a one-to-one correspondence. The contents of the identification of the driving data are not limited herein and may be set according to the user's needs.

The following embodiments are described in detail below in which, for example, two images to be associated are obtained within the same specified area.

At step S120, in response to determining that the plurality of images to be associated do not belong to the same driving data according to the image information corresponding to the plurality of images to be associated, at least one piece of spatial data is determined according to the image information corresponding to the plurality of images to be associated, in which the driving data includes a plurality of frames of images generated by a vehicle and image information corresponding to each of the plurality of frames of images.

It is understood that on the basis of the above S110, after obtaining two images to be associated, it is determined whether the two images to be associated belong to the same driving data according to the image information corresponding to the two images to be associated, and then the images to be associated are preliminarily classified, to improve the calculation efficiency. Each driving data consists of multiple frames of images with the same identification as the driving data. The identification of the image can also be stored in the image information. For example, vehicle A generates driving data A1, which includes 5 frames of images that are noted as A1-1 to A1-5. If the two obtained images to be associated are A1-1 and A1-5, it is determined that the two images to be associated belong to the same driving data. If the two obtained images to be associated are A1-1 and B1-5, it is determined that the two images to be associated do not belong to the same driving data. If it is determined that the two images to be associated do not belong to the same driving data according to the image information corresponding to the two images to be associated, one piece of spatial data is determined according to the image information corresponding to the two images to be associated. The spatial data includes distance data and angle data. The distance data includes a horizontal distance and a height distance, and the angle data can be an angle of direction or an angle of orientation. In detail, one piece of spatial data is calculated according to the GPS coordinates corresponding respectively to two images, and one piece of spatial data can be calculated for every two images to be associated. Correspondingly, if three images to be associated are acquired, at most three pieces of spatial data can be calculated. The driving data includes a plurality of frames of images generated by the vehicle and image information corresponding to each frame of image in the plurality of frames of images.

In some embodiments, the image association method provided by the disclosure further includes:
in response to determining that the plurality of images to be associated belong to the same driving data according to the image information corresponding to the plurality of images to be associated, determining whether the plurality of images to be associated are adjacent frames of images in the driving data; and if yes, associating images that are adjacent frames in the plurality of images to be associated; if no, determining the at least one piece of spatial data according to the image information corresponding to the plurality of images to be associated.

It is understood that if it is determined that two images to be associated belong to the same driving data according to the image information corresponding to the two images to be associated, it is further determined whether the two images to be associated are adjacent frames of images in the driving data. For example, in the above example, the driving data A1 includes the image A1-1 and the image A1-2 that are adjacent frames of images, and after determining that the two images to be associated are adjacent frames of images in the driving data, the two images to be associated that are adjacent frames of images are associated. If it is determined that the two images to be associated are not adjacent frames of images in the driving data, the spatial data of the two images to be associated needs to be calculated. For example, in the above example, the image A1-1 and the image A1-5 included in the driving data A1 are not adjacent frames of images.

At step S130, images to be associated corresponding to target spatial data that satisfies a preset condition in the at least one piece of spatial data are associated.

Understandably, on the basis of the above step S120, after calculating the at least one piece of spatial data according to the acquired image information corresponding to the plurality of images to be associated, the spatial data that satisfies the preset condition is determined in the at least one piece of spatial data and denoted as the target spatial data. One piece of spatial data can be calculated for two images to be associated, and it is determined whether the spatial data satisfies the preset condition. If the spatial data satisfies the preset condition, the two images to be associated are associated, and if the spatial data does not satisfy the preset condition, it is determined that there is no association relation between the two images to be associated.

In some embodiments, the above step S130 includes: associating the images to be associated corresponding to the target spatial data whose distance data is less than a first preset threshold and whose angle data is less than a second preset threshold in the at least one piece of spatial data, in which two corresponding images to be associated exist for one piece of spatial data.

It is understood that in the at least one piece of spatial data obtained by calculation, the spatial data whose distance data is less than the first preset threshold and whose angle is less than the second preset threshold is determined as the target spatial data, in which the distance data includes a horizontal distance and a height distance. The first preset threshold includes a horizontal threshold and a height threshold. For example, the horizontal threshold may be 20 meters, the height threshold may be 5 meters. The second preset threshold is an angle threshold, for example, 30 degrees. If it is determined, according to the GPS coordinates of the two images to be associated, that the horizontal distance is less than 20 meters, the height distance is less than 5 meters, and the angle of direction is less than 5 degrees, it indicates that the two images to be associated have an association relation, and thus the two images to be associated are associated.

It is understood that the image association method provided by the disclosure can also be applied to a scenario of determining a current position of the vehicle during navigation, to further determine whether the vehicle is on the main road or on the secondary road, or on the bridge or under the bridge. A reference image for a road section where positioning errors are prone to occur can be pre-stored and used as one of the images to be associated. When the vehicle travels to the road section, an image association between the on-board image generated by the vehicle and the reference image is performed. If it is determined that there is an association relation between the on-board image and the reference image, the road corresponding to the reference image can be determined as the road where the vehicle is currently located, thereby improving the accuracy of vehicle positioning.

In the image association method provided by the disclosure, the plurality of images to be associated are obtained, in which each of the plurality of images to be associated has corresponding image information. In response to determining that the plurality of images to be associated do not belong to the same driving data according to the image information corresponding to the plurality of images to be associated, the at least one piece of spatial data is determined according to the image information corresponding to the plurality of images to be associated, in which the driving data includes a plurality of frames of images generated by a vehicle and image information corresponding to each of the plurality of frames of images. Two images to be associated corresponding to the target spatial data that satisfies the preset condition in the at least one piece of spatial data are associated. The method provided by this disclosure performs initial classification on the images to be associated by judging the driving data to which the images to be associated belong, which can speed up the image association process and reduce the amount of calculation. For images that do not belong to the same driving data, i.e., images that do not belong to images generated by the same vehicle at the same time period, the spatial data between the two images is further calculated, which can be understood as the data obtained according to the position and posture when the two images are generated. Whether the two images are associated or not can be determined according to the spatial data between the two images. In this way, the images can be automatically associated quickly and accurately, which reduces the waste of labor and material resources and can facilitate subsequently positioning vehicle according to the associated images.

On the basis of the above embodiments, FIG. 2 is an image association method provided by an embodiment of the disclosure. In some embodiments, after associating the images to be associated corresponding to the target spatial data that satisfies the preset condition in the at least one piece of spatial data, the method further includes the following steps S210-S230 as shown in FIG. 2.

It is understood that after associating two images to be associated, it is further determined whether or not the two images to be associated are incorrectly associated. In detail, it is determined whether or not two images are incorrectly associated right after determining the association between the two images to be associated, or it is determined whether or not a plurality of images to be associated are incorrectly associated after determining the association relations among the plurality of images to be associated, to improve the accuracy of determining the association relations of the images.

In some embodiments, the judgment result indicates that the two associated images are associated incorrectly or the two associated images are not associated incorrectly.

At step S210, a first judgment result is generated according to image information corresponding to the two associated images.

It is understood that the two associated images are noted as a first image and a second image. The first judgment result is generated according to image information corresponding to the first image and image information corresponding to the second image. The judgment result indicates that the two associated images are associated incorrectly or the two associated images are not associated incorrectly.

At step S220, a second judgment result is generated according to extracted feature information of the two associated images.

It is understood that the feature information of the first image and the feature information of the second image are extracted respectively, and the second judgment result is generated according to the feature information of the first image and the feature information of the second image. It is understood that the order of execution of steps S210 and S220 is not limited, and steps S210 and S220 may be executed simultaneously or sequentially in order.

In some embodiments, generating the second judgment result according to the extracted feature information of the two associated images in the above step S220 includes the following steps S221-S223.

At step S221, the feature information of the two associated images is extracted to obtain feature information of the first image of the two associated images and feature information of the second image of the two associated images.

At step S222, feature points in the feature information of the first image and the feature information of the second image are matched, and a number of feature points that are successfully matched is determined.

At step S223, the second judgment result is generated according to the number of feature points that are successfully matched and a third preset threshold.

It is understood that by extracting the feature information of the first image and the second image respectively, the feature information of the first image and the feature information of the second image can be obtained. Dynamic information in the feature information is removed and static information is retained, to reduce the data of the feature points that need to be matched and speed up the calculation process. The dynamic information refers to information of the vehicle itself, such as the vehicle body, and the static information refers to information on road, road signs and fences. The remaining feature points in the feature information of the first image and the feature information of the second image having the dynamic information removed are matched, and the number of feature points that are successfully matched is determined. Each feature point has a corresponding descriptor. If the feature points are successfully matched, it means that the similarity of the descriptors corresponding to the feature points is greater than a preset value, e.g., 90%. That is, if the similarity between the descriptors corresponding to two feature points is greater than 90%, it is determined that the two feature points are successfully matched. The number of feature points that are successfully matched is determined, and the second judgment result is generated according to the number of feature points that are successfully matched and the third preset threshold. The third preset threshold can be 20% or 30%, and the specific value can be determined according to the user's needs. If the number of feature points that are successfully matched is less than or equal to the third preset threshold, it indicates that the first image and the second image are associated incorrectly. If the number of feature points that are successfully matched is greater than the third preset threshold, it indicates that the first image and the second image are not associated incorrectly.

At step S230, if any of the first judgment result and the second judgment result indicates that the two associated images are associated incorrectly, the two associated image are disassociated.

It is understood that on the basis of the above steps S210 and S220, the first judgment result and the second judgment result are obtained by two ways. If any of the first judgment result and the second judgment result indicates that the two associated images are associated incorrectly, the two associated images are disassociated. That is, if any of the judgment results obtained by the above two ways indicates that the two images are associated incorrectly, the two images are disassociated, and only if both of the judgment results indicate that the two images are not associated incorrectly, the two images are associated.

In the image association method provided by the disclosure, after determining the association relation between the two images, it is further determined whether the two images are associated incorrectly. In detail, the first judgment result is generated according to the image information corresponding to the two associated images, the second judgment result is generated according to the extracted feature information of the two associated images, and if either of the first judgment result and the second judgment result indicates that the two associated images are associated incorrectly, the two associated images are disassociated. By determining whether the two images having the association relation are associated incorrectly through the detection of incorrect association, the accuracy of associating images can be effectively improved and the method can be more implementable.

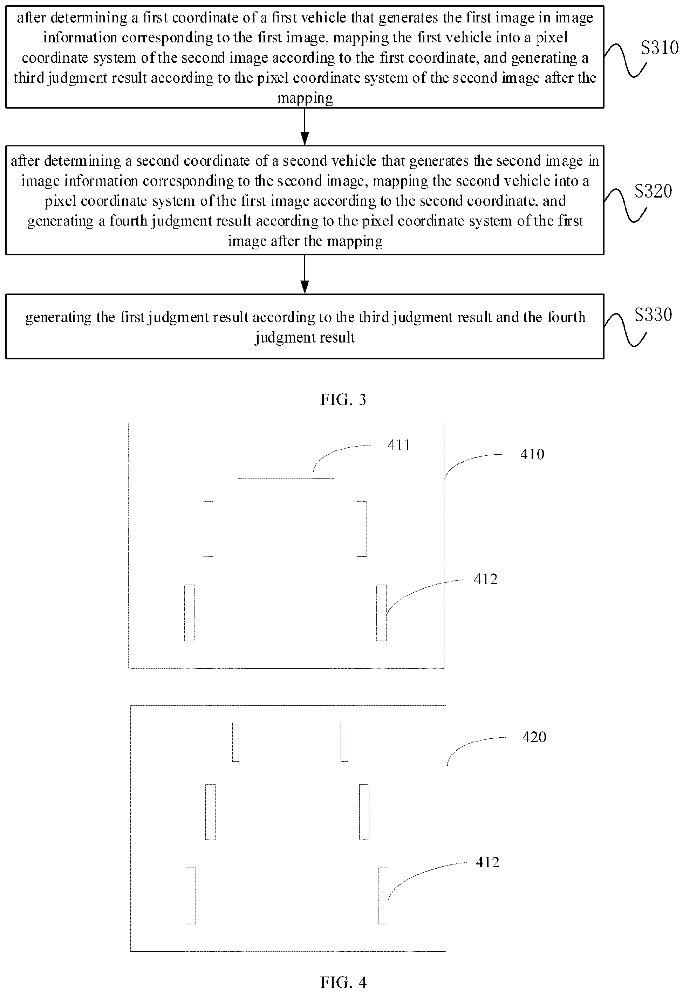

On the basis of the above embodiments, FIG. 3 is a flowchart of an image association method provided by an embodiment of the disclosure. In some embodiments, generating the first judgment result according to the image information corresponding to the two associated images includes the following steps S310 to S330 as shown in FIG. 3.

In some embodiments, the two associated images include a first image and a second image.

At step S310, after determining a first coordinate of a first vehicle that generates the first image in image information corresponding to the first image, the first vehicle is mapped into a pixel coordinate system of the second image according to the first coordinate, and a third judgment result is generated according to the pixel coordinate system of the second image after the mapping.

It is understood that the first coordinate of the first vehicle that generates the first image in the image information corresponding to the first image can be determined. In detail, the vehicle body position of the first vehicle can be determined according to the GPS coordinate in the image information corresponding to the first image. The vehicle body position can specifically be a midpoint of a line connecting rear wheels of the first vehicle, and the coordinate of which is also the GPS coordinate of the image. The midpoint of the line connecting the rear wheels of the first vehicle is mapped into the pixel coordinate system of the second image according to the first coordinate. The midpoint of the line connecting the rear wheels of the first vehicle is mapped to a pixel point in the pixel coordinate system of the second image. In detail, the GPS coordinate of the midpoint of the line connecting the rear wheels of the first vehicle can be converted into the coordinate of the pixel point in the pixel coordinate system of the second image according to the relevant parameters of the camera in the image information corresponding to the second image. After the mapping is completed, the third judgment result is generated according to the pixel coordinate system of the second image after the mapping.

In some embodiments, generating the third judgment result according to the pixel coordinate system of the second image after the mapping, includes: in the pixel coordinate system of the second image after the mapping, determining whether the first vehicle is within a drivable area of the second vehicle that generates the second image; if yes, generating the third judgment result indicating that the two associated images are not associated incorrectly; if no, generating the third judgment result indicating that the two associated images are associated incorrectly; in which, the drivable area of the second vehicle is determined according to a segmented image of the second image.

It can be understood that, in the pixel coordinate system of the second image after the mapping, it is determined whether the first vehicle is in the drivable area of the second vehicle that generates the second image, i.e., it is determined whether the pixel point obtained by mapping the midpoint of the line connecting the rear wheels of the first vehicle into the pixel coordinate system of the second image is in the drivable area of the second vehicle. The drivable area refers to an area composed of multiple pixel points in the pixel coordinate system of the second image. The drivable area of the second vehicle is determined according to the segmented image of the second image. The road in the segmented image can be regarded as the drivable area of the second vehicle. For example, if the drivable area of the second image is composed of 100 pixel points, and the pixel point obtained by mapping the midpoint of the line connecting the rear wheels of the first vehicle into the pixel coordinate system of the second image is one of the 100 pixel points, it can be determined that the first vehicle is in the drivable area of the second vehicle that generates the second image. Meanwhile, the third judgment result indicating that the two associated images are not associated incorrectly is generated, otherwise, the third judgment result indicating that the two associated images are associated incorrectly is generated.

For example, as illustrated in FIG. 4, FIG. 4 is a schematic diagram of an associated image provided by the disclosure. FIG. 4 includes a first image 410 generated by a first vehicle. The first image 410 includes a vehicle body 411 of a second vehicle and a plurality of white lines of a road 412. FIG. 4 also includes a second image 420 generated by the second vehicle. The second image 420 includes the road 412. The drivable area of the first vehicle in the first image 410 is the road 412 ahead, it can be known from the first image 410 that the second vehicle is driving in the drivable area of the first vehicle. The second image 420 includes the drivable area, i.e., the road 412 of the second vehicle. As can be seen from the first image 410 and the second image 420, the first vehicle and the second vehicle are traveling on the road 412 at the same time, and the second vehicle is directly in front of the first vehicle. After mapping the midpoint of the rear wheels of the first vehicle into the pixel coordinate system of the second image, it can be determined according to the pixel coordinate system of the second image after the mapping that the midpoint of the rear wheels of the first vehicle is not in the drivable area of the second vehicle, i.e., not in a partial area of the road 412 shown in the second image 420. The first vehicle is behind the second vehicle, and the road after the second vehicle does not belong to the drivable area of the second vehicle, in which case the third judgment result indicating that the first image and the second image are associated incorrectly can be generated.

At step S320, after determining a second coordinate of a second vehicle that generates the second image in image information corresponding to the second image, the second vehicle is mapped into a pixel coordinate system of the first image according to the second coordinate, and a fourth judgment result is generated according to the pixel coordinate system of the first image after the mapping.

It is understood that regarding the method of mapping the midpoint of the rear wheels of the second image into the pixel coordinate system of the first image, reference can be made to the method of mapping the midpoint of the rear wheels of the first image into the pixel coordinate system of the second image, which will not be repeated herein. The order of execution of S310 and S320 is not limited.

In some embodiments, generating the fourth judgment result according to the pixel coordinate system of the first image after the mapping includes: in the pixel coordinate system of the first image after the mapping, determining whether the second vehicle is in the drivable area of the first vehicle that generates the first image; if yes, generating the fourth judgment result indicating that the two associated images are not associated incorrectly; if no, generating the fourth judgment result indicating that the two associated images are associated incorrectly.

For example, as illustrated in FIG. 4, as can be seen from the first image 410 and the second image 420 that the second vehicle is driving in the drivable area of the first vehicle, and after mapping the midpoint of the rear wheels of the second vehicle to the pixel coordinate system of the first image, the pixel point corresponding to the midpoint of the rear wheels of the second vehicle in the pixel coordinate system of the first image is within the drivable area of the first vehicle. In this case, the fourth judgment result indicating that the first image 410 and the second image 420 are not incorrectly associated can be generated.

At step S330, the first judgment result is generated according to the third judgment result and the fourth judgment result.

It is understood that, on the basis of the above steps S310 and S320, if one of the third judgment result and the fourth judgment result indicates that the two associated images are not incorrectly associated, the first judgment result indicating that the two associated images are not incorrectly associated is generated. With reference to the first image 410 and the second image 420 shown in FIG. 4, the first judgment result indicating that the first image 410 and the second image 420 are not incorrectly associated can be generated.

In the image association method provided by the embodiments of the disclosure, the midpoint of the rear axle of the first vehicle is mapped into the pixel coordinate system of the second image according to the GPS coordinate in the image information corresponding to the first image. The midpoint of the rear axle of the second vehicle is mapped into the pixel coordinate system of the first image according to the GPS coordinate in the image information corresponding to the second image. The accuracy of determining the image association is further improved by generating the judgment result indicating whether the images are associated incorrectly or not according to the pixel coordinate systems obtained after mapping the two images.

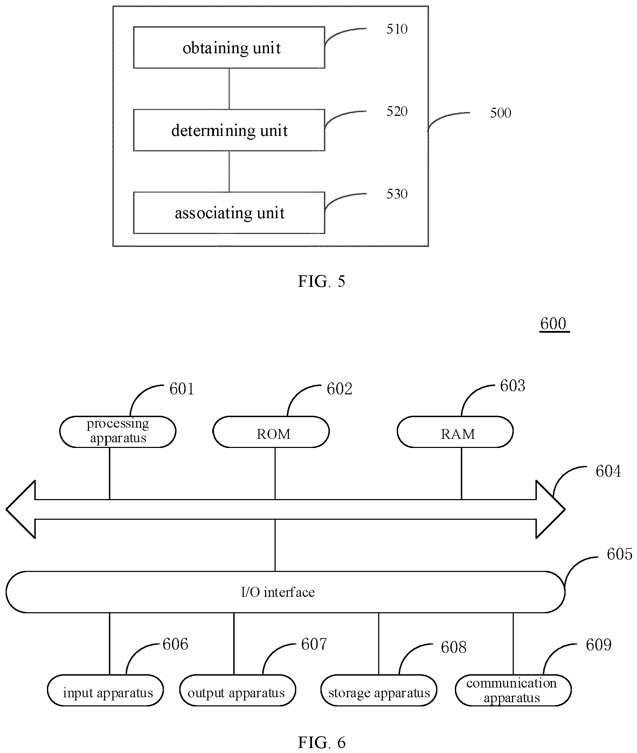

FIG. 5 is a block diagram of an image association apparatus provided by an embodiment of the disclosure. The image association apparatus provided by the embodiment of the disclosure can perform processing steps provided by the above embodiments of the image association method.

As illustrated in FIG. 5, the image association apparatus 500 includes:
an obtaining unit 510, configured to obtain a plurality of images to be associated, in which each of the plurality of images to be associated has corresponding image information;
a determining unit 520, configured to, in response to determining that the plurality of images to be associated do not belong to the same driving data according to the image information corresponding to the plurality of images to be associated, determine at least one piece of spatial data according to the image information corresponding to the plurality of images to be associated, in which the driving data includes a plurality of frames of images generated by a vehicle and image information corresponding to each of the plurality of frames of images; and
an associating unit 530, configured to associate images to be associated corresponding to target spatial data that satisfies a preset condition in the at least one piece of spatial data.

In some embodiments, the apparatus 500 further includes: a first judgment unit. The first judgment unit is configured to:
in response to determining that the plurality of images to be associated belong to the same driving data according to the image information corresponding to the plurality of images to be associated, determine whether the plurality of images to be associated are adjacent frames of images in the driving data; and
if yes, associate images that are adjacent frames in the plurality of images to be associated; if no, determine the at least one piece of spatial data according to the image information corresponding to the plurality of images to be associated.

In some embodiments, in the apparatus 500, the spatial data includes distance data and angle data.

In some embodiments, in associating the images to be associated corresponding to the target spatial data that satisfies the preset condition in the at least one piece of spatial data, the associating unit 530 is further configured to:
associate the images to be associated corresponding to the target spatial data whose distance data is less than a first preset threshold and whose angle data is less than a second preset threshold in the at least one piece of spatial data, in which two corresponding images to be associated exist for one piece of spatial data.

In some embodiments, the apparatus 500 further includes: a second judgment unit. The second judgment unit, after associating the images to be associated corresponding to the target spatial data that satisfies the preset condition in the at least one piece of spatial data, is configured to:
generate a first judgment result according to image information corresponding to the two associated images;
generate a second judgment result according to extracted feature information of the two associated images; and
if any of the first judgment result and the second judgment result indicates that the two associated images are associated incorrectly, disassociate the two associated images;
in which the judgment result indicates that the two associated images are associated incorrectly or the two associated images are not associated incorrectly.

In some embodiments, in the second judgment unit, the two associated images include a first image and a second image, and in generating the first judgment result according to the image information corresponding to the two associated images, the second judgment unit is further configured to:
after determining a first coordinate of a first vehicle that generates the first image in image information corresponding to the first image, map the first vehicle into a pixel coordinate system of the second image according to the first coordinate, and generate a third judgment result according to the pixel coordinate system of the second image after the mapping;
after determining a second coordinate of a second vehicle that generates the second image in image information corresponding to the second image, map the second vehicle into a pixel coordinate system of the first image according to the second coordinate, and generate a fourth judgment result according to the pixel coordinate system of the first image after the mapping; and
generate the first judgment result according to the third judgment result and the fourth judgment result.

In some embodiments, in generating the third judgment result according to the pixel coordinate system of the second image after the mapping, the second judgment unit is further configured to:
in the pixel coordinate system of the second image after the mapping, determine whether the first vehicle is within a drivable area of the second vehicle that generates the second image; if yes, generate the third judgment result indicating that the two associated images are not associated incorrectly; if no, generate the third judgment result indicating that the two associated images are associated incorrectly;
in which the drivable area of the second vehicle is determined according to a segmented image of the second image.

In some embodiments, in generating the second judgment result according to the extracted feature information of the two associated images, the second judgment unit is further configured to:
extract the feature information of the two associated images to obtain feature information of the first image of the two associated images and feature information of the second image of the two associated images;
match feature points in the feature information of the first image and the feature information of the second image, and determine a number of feature points that are successfully matched; and
generate the second judgment result according to the number of feature points that are successfully matched and a third preset threshold.

The image association apparatus of the embodiment shown in FIG. 5 may be used to perform the technical solutions of the method embodiments described above, which are similar in terms of realization principles and technical effects, and will not be described herein.

FIG. 6 is a block diagram of an electronic device provided by an embodiment of the disclosure. With specific reference to FIG. 6, it shows a block diagram of an electronic device 600 suitable for implementing the embodiments of the disclosure. The electronic device 600 includes but is not limited to: a mobile phone, a notebook computer, a digital broadcast receiver, a personal digital assistant (PDA), a Pad, a portable multimedia player (PMP), a vehicle-mounted terminal (e.g., vehicle-mounted navigation terminal), a wearable electronic device and other mobile terminals, and fixed terminals such as a digital TV, a desktop computer, and a smart home device. The electronic device shown in FIG. 6 is only an example and should not impose any limitation on the functions and scope of use of the embodiments of the disclosure.

As illustrated in FIG. 6, the electronic device 600 may include a processing apparatus 601 (e.g., a central processing unit, a graphics processor, etc.) performing various appropriate actions and processes based on programs stored in a Read-Only Memory (ROM) 602 or programs loaded from a storage apparatus 608 to a Random Access Memory (RAM) 603. In the RAM 603, various programs and data required for the operation of the electronic device 600 are stored. The processing apparatus 601, the ROM 602, and the RAM 603 are connected to each other through a bus 604. An input/output (I/O) interface 605 is also connected to the bus 604.

Generally, the following devices can be connected to the I/O interface 605, including: an input apparatus 606, such as a touch screen, a touch pad, a keyboard, a mouse, a camera, a microphone, an accelerometer, a gyroscope; an output apparatus 607, such as a liquid crystal display (LCD), a speaker, a vibrator; a storage apparatus 608, such as a tape, a hard disk; and a communication apparatus 609. The communication device 609 allows the electronic device 600 to communicate with other devices wirelessly or in a wired manner to exchange data. Although FIG. 6 illustrates the electronic device 600 with various units, it should be understood that it is not required to implement or possess all the illustrated units. Alternatively, it may implement or possess more or fewer units.

In particular, according to the embodiments of the disclosure, the process described above with reference to the flowchart may be implemented as a computer software program. For example, the embodiments of the disclosure include a computer program product including computer programs carried on a non-transitory computer-readable medium. The computer programs include program codes for implementing the method illustrated in the flowchart to realize the image association method as described above. In the embodiment, the computer program may be downloaded and installed from a network via the communication apparatus 609, installed from the storage apparatus 608, or installed from the ROM 602. When the computer program is executed by the processing apparatus 601, the above-described functions as defined in the method of the embodiments of the disclosure are performed.

It is noted that the computer-readable medium described above in the disclosure may be a computer-readable signal medium, a computer-readable storage medium or a combination of both. The computer-readable storage medium may include, but is not limited to, an electrical, magnetic, optical, electromagnetic, infrared, or semiconducting system, apparatus or device, or any combination thereof. More specific examples of the computer-readable storage medium may include, but are not limited to, electrical connections having one or more wires, portable computer disks, hard disks, RAMs, ROMs, Erasable Programmable Read Only Memories (EPROMs or flash memories), optical fibers, portable CD-ROMs, optical storage devices, magnetic memory devices, or any suitable combination thereof. In the disclosure, the computer-readable storage medium may be any tangible medium containing or storing programs that may be used by or in combination with an instruction execution system, apparatus or device. In the disclosure, the computer-readable signal medium may include a data signal propagated in a baseband or as part of a carrier that carries computer-readable program codes. The propagated data signal may take a variety of forms, which includes, but is not limited to, an electromagnetic signal, an optical signal, or any suitable combination thereof. The computer-readable signal medium may also be any computer-readable medium other than the computer-readable storage medium. The computer-readable signal medium may send, propagate, or transmit a program that can be used by or in combination with an instruction execution system, apparatus, or device. The program code stored on the computer-readable medium may be transmitted using any suitable medium, which includes, but is not limited to: wire, fiber optic cable, Radio Frequency (RF), or any suitable combination thereof.

In some implementations, the client and the server may communicate using any currently known or future developed network protocol such as a HyperText Transfer Protocol (HTTP), and may be interconnected with digital data communications (e.g., communication networks) of any form or medium. Examples of communication networks include a local area network (LAN), a wide area network (WAN), an inter-network (e.g., the Internet), an end-to-end network (e.g., ad hoc end-to-end network), and any currently known or future developed networks.

The above computer-readable medium may be included in the above-described electronic device, or may be independent instead of being assembled into the electronic device.

In some embodiments, when the one or more programs are executed by the electronic device, the electronic device may also perform other steps described in the above-described embodiments.

Computer program code for performing the operations of the disclosure may be written in one or more programming languages or combinations thereof. The above programming languages include, but are not limited to, object-oriented programming languages, such as Java, Smalltalk, and C++, and conventional procedural programming languages, such as "C" programming language or similar programming languages. The program code may be executed entirely on a user computer, executed partially on the user computer, executed as a stand-alone software package, executed partially on the user computer and partially on a remote computer, or executed entirely on a remote computer or a server. In the case involving the remote computer, the remote computer may be connected to the user computer via any type of network, including a LAN or a WAN, or it may be connected to an external computer (e.g., via the Internet through an Internet service provider).

The flowcharts and block diagrams in the accompanying drawings illustrate optional architectures, functions and operations that may be implemented by the systems, methods and computer program products according to the embodiments of the disclosure. At this point, each frame in the flowcharts or block diagrams may represent a module, a program segment, or a portion of code, which includes one or more executable instructions for implementing a specified logical function. It should also be noted that in some implementations as replacements, the functions labeled in the frames may also be implemented in a different order than those labeled in the accompanying drawings. For example, two consecutively represented boxes may actually be executed substantially in parallel, or they may sometimes be executed in reverse order, depending on the function involved. It should also be noted that each of the frames in the block diagrams and/or flowcharts, and any combination of frames in the block diagrams and/or flowcharts, may be implemented with a specialized hardware-based system that performs the specified function or operation, or may be implemented with a combination of specialized hardware and computer instructions.

Units described as being involved in the embodiments of the disclosure may be implemented by way of software or may be implemented by way of hardware. The name of the unit does not constitute a limitation of the unit itself in a certain case.

The functions described above may be performed, at least in part, by one or more hardware logic components. For example, without restriction, the types of hardware logic components that can be used include: field programmable gate arrays (FPGAs), application-specific integrated circuits (ASICs), application-specific standard products (ASSPs), systems-on-chip (SOCs), complex programmable logic devices (CPLDs), and the like.

In the context of the disclosure, a machine-readable medium may be a tangible medium that may contain or store programs for use by or in combination with an instruction execution system, device, or apparatus. The machine-readable medium may be a machine-readable signal medium or a machine-readable storage medium. The machine-readable medium may include, but is not limited to, an electronic, magnetic, optical, electromagnetic, infrared, or semiconductor system, device, or apparatus, or any suitable combination thereof. More specific examples of machine-readable storage medium may include electrical connections having one or more wires, portable computer disks, hard disks, RAMs, ROMs, EPROMs or flash memories, optical fibers, CD-ROMs, optical storage devices, magnetic storage devices, or any suitable combination thereof.

The embodiments of the disclosure provide a computer program product including computer programs. When the computer programs are executed by a processor, the image association method as described above is implemented.

It should be noted that the relational terms herein, such as "first" and "second", are used only for differentiating one entity or operation, from another entity or operation, which, however do not necessarily require or imply that there should be any real relation or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. **In** the case that there are no more restrictions, an element qualified by the statement "comprises a..." does not exclude the presence of additional identical elements in the process, method, article or device that comprises the said element.

The foregoing are only specific embodiments of the disclosure to enable those skilled in the art to understand or implement the disclosure. Various modifications to these embodiments will be apparent to those skilled in the art, and the general principles defined herein may be realized in other embodiments without departing from the spirit or scope of the disclosure. Therefore, the disclosure will not be limited to these embodiments described herein, but is subject to the broadest scope consistent with the principles and novel features disclosed herein.

## Claims

1. An image association method, comprising:
obtaining a plurality of images to be associated, wherein each of the plurality of images to be associated has corresponding image information;
in response to determining that the plurality of images to be associated do not belong to same driving data according to the image information corresponding to the plurality of images to be associated, determining at least one piece of spatial data according to the image information corresponding to the plurality of images to be associated, wherein the driving data comprises a plurality of frames of images generated by a vehicle and image information corresponding to each of the plurality of frames of images; and
associating images to be associated corresponding to target spatial data that satisfies a preset condition in the at least one piece of spatial data.

2. The method of claim 1, further comprising:
in response to determining that the plurality of images to be associated belong to the same driving data according to the image information corresponding to the plurality of images to be associated, determining whether the plurality of images to be associated are adjacent frames of images in the driving data; and
if yes, associating images that are adjacent frames in the plurality of images to be associated; if no, determining the at least one piece of spatial data according to the image information corresponding to the plurality of images to be associated.

3. The method of claim 1 or 2, wherein the spatial data comprises distance data and angle data; and
associating the images to be associated corresponding to the target spatial data that satisfies the preset condition in the at least one piece of spatial data, comprises:
associating the images to be associated corresponding to the target spatial data whose distance data is less than a first preset threshold and whose angle data is less than a second preset threshold in the at least one piece of spatial data, wherein two corresponding images to be associated exist for one piece of spatial data.

4. The method of any one of claims 1-3, further comprising:
generating a first judgment result according to image information corresponding to two associated images;
generating a second judgment result according to extracted feature information of the two associated images; and
if any of the first judgment result and the second judgment result indicates that the two associated images are associated incorrectly, disassociating the two associated images;
wherein the judgment result indicates that the two associated images are associated incorrectly or the two associated images are not associated incorrectly.

5. The method of claim 4, wherein the two associated images comprise a first image and a second image, and generating the first judgment result according to the image information corresponding to the two associated images, comprises:
after determining a first coordinate of a first vehicle that generates the first image in image information corresponding to the first image, mapping the first vehicle into a pixel coordinate system of the second image according to the first coordinate, and generating a third judgment result according to the pixel coordinate system of the second image after the mapping;
after determining a second coordinate of a second vehicle that generates the second image in image information corresponding to the second image, mapping the second vehicle into a pixel coordinate system of the first image according to the second coordinate, and generating a fourth judgment result according to the pixel coordinate system of the first image after the mapping; and
generating the first judgment result according to the third judgment result and the fourth judgment result.

6. The method of claim 5, wherein generating the third judgment result according to the pixel coordinate system of the second image after the mapping, comprises:
in the pixel coordinate system of the second image after the mapping, determining whether the first vehicle is within a drivable area of the second vehicle that generates the second image; if yes, generating the third judgment result indicating that the two associated images are not associated incorrectly; if no, generating the third judgment result indicating that the two associated images are associated incorrectly;
wherein the drivable area of the second vehicle is determined according to a segmented image of the second image.

7. The method of any one of claims 4-6, wherein generating the second judgment result according to the extracted feature information of the two associated images, comprises:
extracting the feature information of the two associated images to obtain feature information of the first image of the two associated images and feature information of the second image of the two associated images;
matching feature points in the feature information of the first image and the feature information of the second image, and determining a number of feature points that are successfully matched; and
generating the second judgment result according to the number of feature points that are successfully matched and a third preset threshold.

8. An image association apparatus, comprising:
an obtaining unit, configured to obtain a plurality of images to be associated, wherein each of the plurality of images to be associated has corresponding image information;
a determining unit, configured to, in response to determining that the plurality of images to be associated do not belong to the same driving data according to the image information corresponding to the plurality of images to be associated, determine at least one piece of spatial data according to the image information corresponding to the plurality of images to be associated, wherein the driving data comprises a plurality of frames of images generated by a vehicle and image information corresponding to each of the plurality of frames of images; and
an associating unit, configured to associate images to be associated corresponding to target spatial data that satisfies a preset condition in the at least one piece of spatial data.

9. An electronic device, comprising:
a memory;
a processor; and
computer programs;
wherein, the computer programs are stored in the memory, and are configured to be executed by the processor, to implement the image association method of any one of claims 1-7.

10. A computer readable storage medium having computer programs stored thereon, wherein when the computer programs are executed by a processor, the steps of the image association method of any one of claims 1-7 are implemented.

11. A computer program product comprising computer programs, wherein when the computer programs are executed by a processor, the image association method of any one of claims 1-7 is implemented.
